# EUROPEAN PATENT APPLICATION

(11) **EP 4 604 600 A1**
(43) Date of publication of application: **20.08.2025**
(21) Application number: 23887939.9
(22) Date of filing: 06.11.2023
(51) Int. Cl.: H04W 24/04

(54) **INFORMATION PROCESSING METHOD AND DEVICE**

(30) Priority: 11.11.2022 CN 202211412983
(71) Applicant: Huawei Technologies Co., Ltd., Shenzhen, Guangdong 518129 (CN)
(72) Inventor: YU, Ming, Shenzhen, Guangdong 518129 (CN); ZHOU, Weijian, Shenzhen, Guangdong 518129 (CN); WANG, Shanshan, Shenzhen, Guangdong 518129 (CN); YANG, Yongjun, Shenzhen, Guangdong 518129 (CN); SHUAI, Lingliang, Shenzhen, Guangdong 518129 (CN); PENG, Zhi, Shenzhen, Guangdong 518129 (CN)
(74) Representative: Grünecker Patent- und Rechtsanwälte PartG mbB
(86) International application number: PCT/CN2023/129850
(87) International publication number: WO 2024/099249

(57) **Abstract**

This application provides an information processing method and a related device, to simplify an operation and maintenance process of a communication network, so as to reduce operation and maintenance costs. In the method, a first device obtains first information, where the first information indicates an intent; and the first device processes the intent based on second information, where the second information indicates an operation on the intent. In other words, after the first device determines the intent for the communication network, the first device processes the intent based on the operation on the intent, to implement network operation and maintenance based on the intent. This can simplify the operation and maintenance process of the communication network, to reduce the operation and maintenance costs.

## Description

This application claims priority to Chinese Patent Application No. 202211412983.0, filed with the China National Intellectual Property Administration on November 11, 2022 and entitled "INFORMATION PROCESSING METHOD AND DEVICE", which is incorporated herein by reference in its entirety.

### TECHNICAL FIELD

This application relates to the field of communication technologies, and in particular, to an information processing method and a device.

### BACKGROUND

In a communication network, there are communication roles typically including terminal devices and network devices. A process of communication between different terminal devices usually depends on signal processing performed by one or more network devices on wireless signals and/or wired signals.

Currently, users of communication devices typically do not have network operation and maintenance capabilities. For example, in a consumer-oriented (to consumer, to C for short) communication scenario, a communication device is typically used by an individual user, but the individual user mainly focuses on user experience obtained based on the communication device in a communication process and does not care about running of a communication network; therefore, operation and maintenance of the communication network are usually implemented by network operators.

However, in a future communication system, due to communication security considerations, geographical location limitations (for example, in a business-oriented (to business, to B for short) communication scenario), or other reasons, some or all of operation and maintenance of a communication network may need to be performed by users of communication devices, but the users of the communication devices typically do not have professional operation and maintenance capabilities.

Therefore, there is an urgent need to resolve the technical problem of how to simplify an operation and maintenance process of the communication network.

### SUMMARY

This application provides an information processing method and a related device, to simplify an operation and maintenance process of a communication network, so as to reduce operation and maintenance costs.

A first aspect of this application provides an information processing method. The method is performed by a first device, the method is performed by some components (such as a processor, a chip, or a chip system) in the first device, or the method may be implemented by a logical module or software that can implement all or some functions of the first device. In the first aspect and possible implementations of the first aspect, an example in which the information processing method is executed by the first device is used for description. The first device may be a server, a virtual machine, a container, or the like. In the method, the first device obtains first information, where the first information indicates an intent; and the first device processes the intent based on second information, where the second information indicates an operation on the intent.

Based on the foregoing technical solution, after the first device obtains the first information and determines the intent indicated by the first information, the first device processes the intent based on the second information, where the second information indicates the operation on the intent. In other words, after the first device determines the intent for a communication network, the first device processes the intent based on the operation on the intent, to implement network operation and maintenance based on the intent. This can simplify an operation and maintenance process of the communication network, to reduce operation and maintenance costs.

It may be understood that the intent in this application indicates an expectation for a network system, including a requirement, an objective, a constraint, and the like.

Optionally, the network system is a 3rd generation partnership project (3rd generation partnership project, 3GPP) system.

In a possible implementation of the first aspect, the first information indicates an intent of a first network; or the first information indicates an intent of at least one of N subnetworks included in a first network, and N is a positive integer.

Based on the foregoing technical solution, the first information obtained by the first device indicates an intent of a network (for example, the first network), or the first information obtained by the first device indicates an intent of a subnetwork (for example, the at least one subnetwork included in the first network) included in a network, so that the solution can implement multi-layer intent deployment and support providing a plurality of intent configuration granularities.

Optionally, in this application, the N subnetworks included in the first network may also be represented as N networks included in the first network, N second networks included in the first network, or another description. This is not limited herein.

In a possible implementation of the first aspect, the first information indicates that the intent includes at least one of a first intent, a second intent, and a third intent, where the first intent is associated with network deployment, the second intent is associated with service deployment in a network, and the third intent is associated with a value-added service in the network.

Based on the foregoing technical solution, the first information obtained by the first device indicates one or more intents of the network (or the subnetwork), for example, supports at least one intent of the network deployment, service deployment, or the value-added service, so that a plurality of types of intent deployment can be implemented.

Optionally, the first intent indicates a network construction requirement and/or a network expansion requirement. For example, the first intent may be referred to as a network deployment intent (network deployment intent), a network construction intent, a network expansion intent, or another name. This is not limited herein.

Optionally, the second intent indicates a service deployment requirement and/or a network slice requirement in the network. For example, the second intent may be referred to as a network service deployment intent (network service deployment intent), a service deployment intent, a slice deployment intent, or another name. This is not limited herein.

Optionally, the third intent indicates a value-added service requirement in the network. For example, the third intent may be referred to as a network value-added service intent (network value-added service intent), a value-added service intent, or another name. This is not limited herein.

In a possible implementation of the first aspect, the first intent includes at least one of a network type, a capacity performance requirement, a spectrum resource, a radio parameter range, or a transport parameter; the second intent includes at least one of associated capacity performance, a capacity identifier, a map identifier, a capacity requirement type, a service area, a service subarea, service group information, or service flow information; and the third intent includes at least one of a network energy efficiency requirement or a network positioning requirement.

In a possible implementation of the first aspect, the second intent includes a capacity requirement mode; and when the capacity requirement mode is a first mode, the second intent further includes at least one of a maximum quantity of services, a quantity of concurrent services, an average uplink throughput, an average downlink throughput, an average uplink latency, or an average downlink latency; or when the capacity requirement mode is a second mode, the second intent further includes at least one of an associated service group identifier, network availability, service area information, service subarea information, the service group information, or the service flow information.

Optionally, the first mode may be referred to as a simple mode or a simplified mode, or another description manner may be used.

Optionally, the second mode may be referred to as a precise mode or a complex mode, or another description manner may be used.

In a possible implementation of the first aspect, the service area information includes at least one of a service area identifier or a reference point; the service subarea information includes at least one of a service subarea identifier, an associated service area, a subarea type, or the reference point; the service group information includes at least one of a service group identifier, the associated service area, the maximum quantity of services, the quantity of concurrent services, a mobility type, a location list, an associated service subarea, a height, or an associated service flow; and the service flow information includes at least one of a service flow identifier, an uplink packet size, an uplink interval, uplink transmission time, a downlink packet size, a downlink interval, or downlink transmission time.

Based on the foregoing technical solution, the first intent, the second intent, and the third intent each may include one or more of the foregoing information, to provide a specific implementation of each intent.

In a possible implementation of the first aspect, the at least one subnetwork includes at least one of the following items: a radio access network subnetwork, a core network subnetwork, a transmission network subnetwork, or a terminal subnetwork.

Based on the foregoing technical solution, the intent of the first network (or the at least one subnetwork included in the first network) may include an intent of different objects in the network, including one or more of a radio access network, a core network, a transmission network, and a terminal, to improve flexibility of implementing the solution.

In a possible implementation of the first aspect, the second information includes at least one of the following items: creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent.

Based on the foregoing technical solution, the second information indicating the operation on the intent may include at least one of the foregoing plurality of items of information, to improve the flexibility of implementing the solution.

In a possible implementation of the first aspect, after the intent is processed based on the second information, the intent corresponds to at least one of the following states, including:
a first state, indicating management information of the intent;
a second state, indicating execution information of the intent;
a third state, indicating target fulfillment information of the intent; or
a fourth state, indicating conflict information of the intent.

Based on the foregoing technical solution, after the intent indicated by the first information is operated based on the second information, the intent indicated by the first information may be implemented by using the at least one of the foregoing states, and information in at least one dimension of the management information, the execution information, the target fulfillment information, and the conflict information that correspond to the intent is provided, to further simplify the operation and maintenance process of the communication network.

Optionally, the first state may be referred to as an administrative state, a management state, a locked administrative state, or another name. This is not limited herein.

Optionally, the second state may be referred to as an execution state, a running state, or another name. This is not limited herein.

Optionally, the third state may be referred to as a target fulfilment state, a fulfil state, a fulfillment state, or another name. This is not limited herein.

Optionally, the fourth state may be referred to as a conflict state, a state indicating whether a conflict occurs, or another name. This is not limited herein.

In a possible implementation of the first aspect, the first state indicates that the management state of the intent is locked or unlocked; the second state indicates that the running state of the intent is any one of null, not reserved, reserving, reserved, active, or executed; the third state indicates that the target fulfillment state of the intent is any one of null, fulfilled, or unfulfilled; and the fourth state indicates that conflict state information of the intent is any one of null, conflicted, or not conflicted.

Based on the foregoing technical solution, at least the first state corresponding to the intent may be implemented in the foregoing manner, to provide a specific implementation of the solution.

In a possible implementation of the first aspect, the second information indicates M operations on the intent, and M is an integer greater than 1; and a process of processing the intent based on the second information includes: processing the intent according to one instruction for the M operations, or processing the intent according to M instructions for the M operations.

Optionally, the M instructions are in one-to-one correspondence with the M operations. In other words, the M operations respectively correspond to the M instructions.

Optionally, the process of processing the intent based on the second information includes: processing the intent according to P instructions for the M operations, where P is an integer less than or equal to M.

Optionally, a manner of processing the intent according to the one instruction for the M operations may be referred to as a one-click deployment manner.

Optionally, a manner of processing the intent according to the M instructions for the M operations may be referred to as a step-by-step deployment manner.

In a possible implementation of the first aspect, the first information and the second information are included in same configuration information.

Based on the foregoing technical solution, in an implementation in which the first device obtains the second information by configuring the second information, the first information and the second information may be included in the same configuration information, to provide the one-click deployment manner corresponding to the intent and the operation on the intent, so as to simplify the intent deployment.

In a possible implementation of the first aspect, the first information and the second information are included in different configuration information.

Based on the foregoing technical solution, in the implementation in which the first device obtains the second information by configuring the second information, the first information and the second information may be included in different configuration information, to provide a step-by-step deployment manner corresponding to the intent and the operation on the intent.

Optionally, the second information may alternatively be preconfigured information.

A second aspect of this application provides an information processing apparatus. The apparatus is disposed in a first device, and the apparatus may implement the method in any one of the first aspect or the possible implementations of the first aspect. The apparatus includes a corresponding unit or module configured to perform the method. The unit or module included in the apparatus can be implemented by software and/or hardware. For example, the apparatus may be a first device, the apparatus may be a component (for example, a processor, a chip, or a chip system) in the first device, or the apparatus may be a logical module or software that can implement all or some functions of the first device.

The apparatus includes a processing unit. The processing unit is configured to obtain first information, where the first information indicates an intent; and the processing unit is further configured to process the intent based on second information, where the second information indicates an operation on the intent.

In a possible implementation of the second aspect, the first information indicates an intent of a first network.

In a possible implementation of the second aspect, the first information indicates an intent of at least one of N subnetworks included in a first network, and N is a positive integer.

In a possible implementation of the second aspect, the intent indicated by the first information includes at least one of a first intent, a second intent, and a third intent, where the first intent is associated with network deployment, the second intent is associated with service deployment in a network, and the third intent is associated with a value-added service in the network.

In a possible implementation of the second aspect, the first intent indicates a network construction requirement and/or a network expansion requirement, the second intent indicates a service deployment requirement and/or a network slice requirement in the network, and the third intent indicates a value-added service requirement in the network.

In a possible implementation of the second aspect, the first intent includes at least one of a network type, a capacity performance requirement, a spectrum resource, a radio parameter range, or a transport parameter; the second intent includes at least one of associated capacity performance, a capacity identifier, a map identifier, a capacity requirement type, a service area, a service subarea, service group information, or service flow information; and the third intent includes at least one of a network energy efficiency requirement or a network positioning requirement.

In a possible implementation of the second aspect, the second intent includes a capacity requirement mode; and when the capacity requirement mode is a first mode, the second intent further includes at least one of a maximum quantity of services, a quantity of concurrent services, an average uplink throughput, an average downlink throughput, an average uplink latency, or an average downlink latency; or when the capacity requirement mode is a second mode, the second intent further includes at least one of an associated service group identifier, network availability, service area information, service subarea information, the service group information, or the service flow information.

Optionally, the first mode may be referred to as a simple mode or a simplified mode, or another description manner may be used.

Optionally, the second mode may be referred to as a precise mode or a complex mode, or another description manner may be used.

In a possible implementation of the second aspect, the service area information includes at least one of a service area identifier or a reference point; the service subarea information includes at least one of a service subarea identifier, an associated service area, a subarea type, or the reference point; the service group information includes at least one of a service group identifier, the associated service area, the maximum quantity of services, the quantity of concurrent services, a mobility type, a location list, an associated service subarea, a height, or an associated service flow; and the service flow information includes at least one of a service flow identifier, an uplink packet size, an uplink interval, uplink transmission time, a downlink packet size, a downlink interval, or downlink transmission time.

In a possible implementation of the second aspect, the intent of the at least one subnetwork includes at least one of the following items: an intent of a radio access network in the at least one subnetwork, an intent of a core network in the at least one subnetwork, an intent of a transmission network in the at least one subnetwork, or an intent of a terminal in the at least one subnetwork.

In a possible implementation of the second aspect, the second information includes at least one of the following items: creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent.

In a possible implementation of the second aspect, after the intent is processed based on the second information, the intent corresponds to at least one of the following states, including:
a first state, indicating management information of the intent;
a second state, indicating execution information of the intent;
a third state, indicating target fulfillment information of the intent; or
a fourth state, indicating conflict information of the intent.

In a possible implementation of the second aspect, the first state indicates that the management state of the intent is locked or unlocked; the second state indicates that the running state of the intent is any one of null, not reserved, reserving, reserved, active, or executed; the third state indicates that the target fulfillment state of the intent is any one of null, fulfilled, or unfulfilled; and the fourth state indicates that conflict state information of the intent is any one of null, conflicted, or not conflicted.

In a possible implementation of the second aspect, the second information indicates M operations on the intent, and M is an integer greater than 1; and the processing unit is specifically configured to: process the intent according to one instruction for the M operations, or process the intent according to M instructions for the M operations.

Optionally, a manner of processing the intent according to the one instruction for the M operations may be referred to as a one-click deployment manner.

Optionally, a manner of processing the intent according to the M instructions for the M operations may be referred to as a step-by-step deployment manner.

In a possible implementation of the second aspect, the first information and the second information are included in same configuration information.

In a possible implementation of the second aspect, the first information and the second information are included in different configuration information.

In the second aspect of embodiments of this application, composition modules of the communication apparatus may be configured to: perform the steps performed in the possible implementations of the first aspect, and achieve corresponding technical effects. For details, refer to the first aspect. Details are not described herein again.

A third aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method according to any one of the first aspect or the possible implementations of the first aspect.

A fourth aspect of embodiments of this application provides a communication apparatus, including at least one logic circuit and an input/output interface. The logic circuit is configured to perform the method according to any one of the first aspect or the possible implementations of the first aspect.

A fifth aspect of embodiments of this application provides a computer-readable storage medium storing one or more computer-executable instructions. When the computer-executable instructions are executed by a processor, the processor performs the method according to any one of the first aspect or the possible implementations of the first aspect.

A sixth aspect of embodiments of this application provides a computer program product (or referred to as a computer program) storing one or more computers. When the computer program product is executed by a processor, the processor performs the method according to any one of the first aspect or the possible implementations of the first aspect.

A seventh aspect of embodiments of this application provides a chip system. The chip system includes at least one processor, configured to support a first communication apparatus in implementing a function according to any one of the first aspect or the possible implementations of the first aspect.

In a possible design, the chip system may further include a memory. The memory is configured to store program instructions and data that are necessary for the first communication apparatus. The chip system may include a chip, or may include the chip and another discrete component. Optionally, the chip system further includes an interface circuit, and the interface circuit provides program instructions and/or data for the at least one processor.

An eighth aspect of embodiments of this application provides a communication system. The communication system includes the communication apparatus in the third aspect, and/or the communication apparatus in the fourth aspect and the communication apparatus in the sixth aspect.

Optionally, the system further includes one or more network devices.

Optionally, the system further includes one or more terminal devices.

For technical effects brought by any design manner of the second aspect to the eighth aspect, refer to the technical effects brought by different implementations of the first aspect. Details are not described herein again.

### BRIEF DESCRIPTION OF DRAWINGS

FIG. 1 is a diagram of a communication system according to this application;
FIG. 2 is a diagram of an information processing method according to this application;
FIG. 3 is another diagram of an information processing method according to this application;
FIG. 4 is another diagram of an information processing method according to this application;
FIG. 5 is another diagram of an information processing method according to this application;
FIG. 6a is a diagram of an intent state according to this application;
FIG. 6b is another diagram of an intent state according to this application;
FIG. 6c is another diagram of an intent state according to this application;
FIG. 6d is another diagram of an intent state according to this application;
FIG. 7 is another diagram of an information processing method according to this application;
FIG. 8 is another diagram of an information processing method according to this application;
FIG. 9 is a diagram of a communication apparatus according to this application;
FIG. 10 is another diagram of a communication apparatus according to this application; and
FIG. 11 is another diagram of a communication apparatus according to this application.

### DESCRIPTION OF EMBODIMENTS

The following describes technical solutions of this application with reference to accompanying drawings in this application. All other solutions obtained by a person of ordinary skill in the art based on this application without creative efforts shall fall within the protection scope of this application.

Some terms in this application are first described, to help a person skilled in the art have a better understanding.
1. Terminal device: The terminal device may be a wireless terminal device that can receive scheduling and indication information of a network device. The wireless terminal device may be a device that provides a user with voice and/or data connectivity, a handheld device with a wireless connection function, or another processing device connected to a wireless modem.
   The terminal device may communicate with one or more core networks or the internet through a radio access network (radio access network, RAN). The terminal device may be a mobile terminal device, for example, a mobile phone (or referred to as a "cellular" phone, mobile phone (mobile phone)), a computer, or a data card. Alternatively, the terminal device may be a portable, pocket-sized, handheld, computer built-in, or vehicle-mounted mobile apparatus that exchanges voice and/or data with the radio access network. Alternatively, the terminal device may be, for example, a device like a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), a user equipment (user equipment, UE), a mobile terminal (mobile terminal, MT), or the like. Alternatively, the terminal device may be a wearable device or a terminal device in a next-generation communication system, for example, a terminal device in a sixth-generation (6-Generation, 6G) communication system, a terminal device in a future evolved public land mobile network (public land mobile network, PLMN), or the like.
2. Network device: The network device may be a device in a wireless network. For example, the network device may be a radio access network (radio access network, RAN) node (or device) that connects a terminal device to a wireless network, and may also be referred to as a base station. Some examples of the RAN device are: a new generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including the CU node and the DU node.

In some implementations, the network device may further include a satellite, an airplane, an uncrewed aerial vehicle, or the like.

In addition, in another possible case, the network device may be another apparatus providing a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus, for example, a processor, a chip, or a chip system, that can support the network device in implementing the function. The apparatus may be mounted to the network device, or may be used in combination with the network device. In the technical solutions provided in this application, an example in which the apparatus configured to implement the function of the network device is the network device is used for describing the technical solutions provided in this application.

In this application, an apparatus configured to implement a function of the terminal device may be a terminal device, or may be an apparatus, for example, a processor, a chip, or a chip system, that can support the terminal device in implementing the function. The apparatus may be mounted to the terminal device, or may be used in combination with the terminal device. In the technical solutions provided in this application, an example in which the apparatus configured to implement the function of the terminal device is the terminal device is used for describing the technical solutions provided in this application.

3. Terms "system" and "network" in this application may be used interchangeably. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or a new radio vehicle to everything (NR vehicle to everything, NR V2X) system; may be applied to a system of hybrid networking of a plurality of access technologies (for example, LTE and 5G); may be applied to a device-to-device (device-to-device, D2D) communication system, a machine to machine (machine to machine, M2M) communication system, an internet of things (Internet of Things, IoT), or an uncrewed aerial vehicle communication system; may be applied to a communication system that supports a plurality of wireless technologies, for example, an LTE technology and an NR technology, and the like; or may be applied to a non-terrestrial communication system, for example, a satellite communication system or a high-altitude communication platform. In addition, optionally, this application may be applied to a narrowband internet of things (narrowband internet of things, NB-IoT) system, an enhanced data rate global mobile communications (global system for mobile communications, GSM) evolution system (enhanced data rate for GSM evolution, EDGE), a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a system to which a future-oriented communication technology is applied, or another communication system.

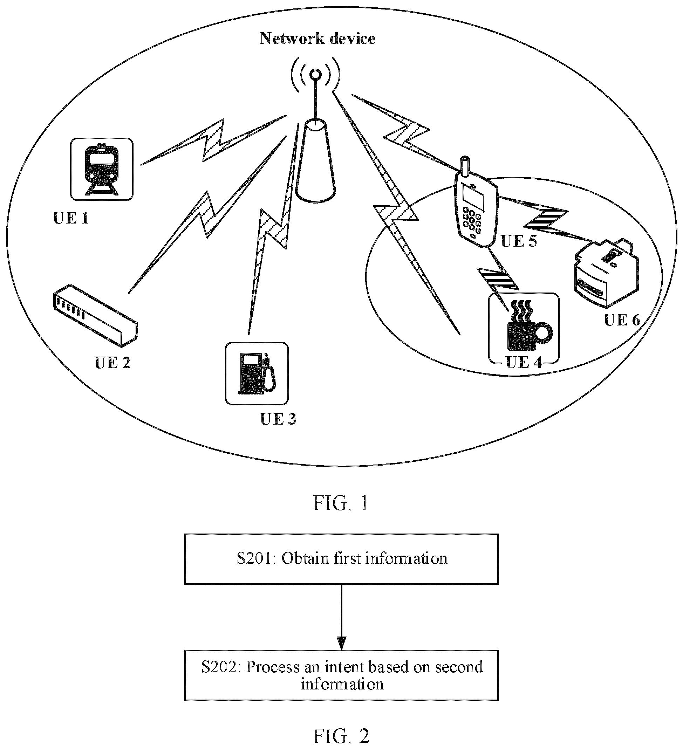

FIG. 1 is a diagram of an application scenario according to an embodiment of this application.

As shown in FIG. 1, a signal sender may be a network device, and a signal receiver may be one or more UEs in a UE 1 to a UE 6. In this case, the network device and the UE 1 to the UE 6 form a communication system. For example, in the communication system, the UE 1 to the UE 6 may send uplink data to the network device, and the network device receives the uplink data sent by the UE 1 to the UE 6. In addition, the network device may send configuration information to the UE 1 to the UE 6.

It may be understood that a signal sender may be the one or more UEs in the UE 1 to the UE 6, and a signal receiver may be the network device. Alternatively, a signal sender may be the one or more UEs in the UE 1 to the UE 6, and a signal receiver may be another UE in the UE 1 to the UE 6. Alternatively, both a signal sender and a signal receiver may be network devices.

Wireless communication shown in FIG. 1 is used as an example. In the communication network, communication roles usually include different terminal devices, a terminal device and a network device, or the like. A process of communication between different terminal devices usually depends on signal processing performed by one or more network devices on wireless signals and/or wired signals.

Currently, users of communication devices typically do not have network operation and maintenance capabilities. For example, in a consumer-oriented (to consumer, to C for short) communication scenario, a communication device is typically used by an individual user, but the individual user mainly focuses on user experience obtained based on the communication device in a communication process, and does not care about running of a communication network; therefore, operation and maintenance of the communication network are usually implemented by network operators.

However, in a future communication system, due to communication security considerations, geographical location limitations (for example, in a business-oriented (to business, to B for short) communication scenario), or other reasons, some or all of operation and maintenance of a communication network may need to be performed by users of communication devices, but the users of the communication devices typically do not have a professional operation and maintenance capabilities. Therefore, there is an urgent need to resolve the technical problem of how to simplify an operation and maintenance process of the communication network.

To resolve the foregoing problem, this application provides an information processing method and a related device, to simplify the operation and maintenance process of the communication network, so as to reduce operation and maintenance costs. The following further provides descriptions with reference to the accompanying drawings.

FIG. 2 is a diagram of implementation of an information processing method according to this application. The method includes the following steps.

S201: A first device obtains first information, where the first information indicates an intent.

It may be understood that the intent in this application indicates an expectation for a network system, including a requirement, an objective, a constraint, and the like.

Optionally, the network system is a 3rd generation partnership project (3rd generation partnership project, 3GPP) system.

In a possible implementation, the first information obtained by the first device in step S201 indicates an intent of a first network; or the first information indicates an intent of at least one of N subnetworks included in a first network, and N is a positive integer. Specifically, the first information obtained by the first device indicates an intent of a network (for example, the first network), or the first information obtained by the first device indicates an intent of a subnetwork (for example, the at least one subnetwork included in the first network) included in a network, so that the solution can implement multi-layer intent deployment and support provision of a plurality of intent configuration granularities.

In a possible implementation, the intent indicated by the first information obtained by the first device in step S201 includes at least one of a first intent, a second intent, and a third intent, where the first intent is associated with network deployment, the second intent is associated with service deployment in a network, and the third intent is associated with a value-added service in the network. Specifically, the first information obtained by the first device indicates one or more intents of the network (or the subnetwork), for example, supports at least one intent of the network deployment, service deployment, or the value-added service, so that a plurality of types of intent deployment can be implemented.

Optionally, the first intent indicates a network construction requirement and/or a network expansion requirement. For example, the first intent may be referred to as a network deployment intent (network deployment intent), a network construction intent, a network expansion intent, or another name. This is not limited herein.

Optionally, the second intent indicates a service deployment requirement and/or a network slice requirement in the network. For example, the second intent may be referred to as a network service deployment intent (network service deployment intent), a service deployment intent, a slice deployment intent, or another name. This is not limited herein.

Optionally, the third intent indicates a value-added service requirement in the network. For example, the third intent may be referred to as a network value-added service intent (network value-added (VA) service intent), a value-added service intent, or another name. This is not limited herein.

In a possible implementation, the first intent includes at least one of a network type, a capacity performance requirement, a spectrum resource, a radio parameter range, or a transport parameter; the second intent includes at least one of associated capacity performance, a capacity identifier, a map identifier, a capacity requirement type, a service area, a service subarea, service group information, or service flow information; and the third intent includes at least one of a network energy efficiency requirement or a network positioning requirement.

Optionally, the second intent includes a capacity requirement mode; and when the capacity requirement mode is a first mode, the second intent further includes at least one of a maximum quantity of services, a quantity of concurrent services, an average uplink throughput, an average downlink throughput, an average uplink latency, or an average downlink latency; or when the capacity requirement mode is a second mode, the second intent further includes at least one of an associated service group identifier, network availability, service area information, service subarea information, the service group information, or the service flow information.

Optionally, the first mode may be referred to as a simple mode or a simplified mode, or another description manner may be used.

Optionally, the second mode may be referred to as a precise mode or a complex mode, or another description manner may be used.

Optionally, the service area information includes at least one of a service area identifier or a reference point; the service subarea information includes at least one of a service subarea identifier, an associated service area, a subarea type, or the reference point; the service group information includes at least one of a service group identifier, the associated service area, the maximum quantity of services, the quantity of concurrent services, a mobility type, a location list, an associated service subarea, a height, or an associated service flow; and the service flow information includes at least one of a service flow identifier, an uplink packet size, an uplink interval, uplink transmission time, a downlink packet size, a downlink interval, or downlink transmission time.

Specifically, the first intent, the second intent, and the third intent each may include one or more of the foregoing information, to provide a specific implementation of each intent.

In a possible implementation, the at least one subnetwork includes at least one of the following items: a radio access network subnetwork, a core network subnetwork, a transmission network subnetwork, or a terminal subnetwork.

Specifically, the intent of the first network (and/or the at least one subnetwork included in the first network) may include an intent of different objects in the network, including one or more of a radio access network, a core network, a transmission network, and a terminal, to improve flexibility of implementing the solution.

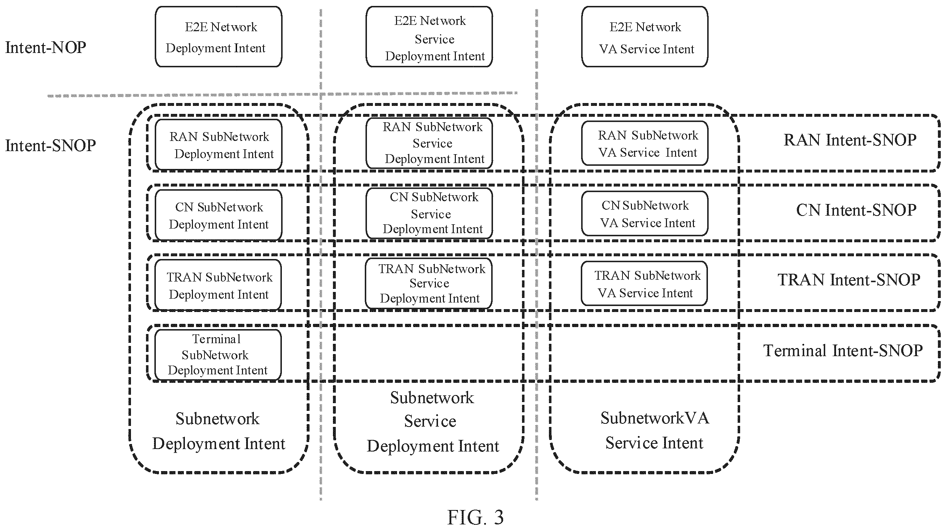

In an implementation example, as shown in FIG. 3, when the first information indicates the intent of the first network, the intent of the first network may be denoted as an intent network operator (intent network operator, Intent-NOP). The first intent included in the Intent-NOP may be an end-to-end network deployment intent (E2E network deployment intent) in FIG. 3, the second intent may be an end-to-end network service deployment intent (E2E network service deployment intent) in FIG. 3, and the third intent may be an end-to-end network value-added service intent (E2E network value-added (VA) service intent) in FIG. 3.

In addition, as shown in FIG. 3, the first information may also indicate the intent of the subnetwork included in the first network, and the intent of the subnetwork may be denoted as an intent subnetwork operator (intent subnetwork operator, Intent-SNOP).

Optionally, in an implementation example shown in FIG. 3, in the case of deployment purpose division, the E2E network deployment intent in the network intent corresponds to a subnetwork deployment intent (subnetwork deployment intent), the E2E network service deployment intent in the network intent corresponds to a subnetwork service deployment intent (subnetwork service deployment intent), and the E2E network VA service intent in the network intent corresponds to a subnetwork value-added service intent (subnetwork VA service intent).

Optionally, in the implementation example shown in FIG. 3, in the case of subnetwork type division:

The first intent (namely, the E2E network deployment intent in the network intent) corresponds to at least one of a RAN subnetwork deployment intent (RAN subnetwork deployment intent), a CN subnetwork deployment intent (CN subnetwork deployment intent), a TRAN subnetwork deployment intent (TRAN subnetwork deployment intent), or a terminal subnetwork deployment intent (Terminal subnetwork deployment intent).

The second intent (namely, the E2E network service deployment intent in the network intent) corresponds to at least one of a RAN subnetwork service deployment intent (RAN subnetwork service deployment intent), a CN subnetwork deployment intent (CN subnetwork service deployment intent), a TRAN subnetwork deployment intent (TRAN subnetwork service deployment intent), or a terminal subnetwork deployment intent (Terminal subnetwork service deployment intent).

The third intent (namely, the E2E network VA service intent in the network intent) corresponds to at least one of a RAN subnetwork value-added service intent (RAN subnetwork VA service intent), a CN subnetwork value-added service intent (CN subnetwork VA service intent), a TRAN subnetwork value-added service intent (TRAN subnetwork VA service intent), or a terminal subnetwork value-added service intent (Terminal subnetwork VA service intent).

Optionally, the foregoing intent associated with the RAN may be referred to as a RAN Intent-SNOP, and corresponds to the RAN subnetwork deployment intent, the RAN subnetwork service deployment intent, and the RAN subnetwork VA service intent.

Optionally, the foregoing intent associated with the CN may be referred to as a CN Intent-SNOP, and corresponds to the CN subnetwork deployment intent, the CN subnetwork service deployment intent, and the CN subnetwork VA service intent.

Optionally, the foregoing intent associated with the TRAN may be referred to as a TRAN Intent-SNOP, and corresponds to the TRAN subnetwork deployment intent, the TRAN subnetwork service deployment intent, and the TRAN subnetwork VA service intent.

Optionally, the foregoing intent associated with the terminal may be referred to as a terminal Intent-SNOP, and corresponds to the terminal subnetwork deployment intent, the terminal subnetwork service deployment intent, and the terminal subnetwork VA service intent.

For ease of understanding, the following separately describes the first intent, the second intent, and the third intent by using examples with reference to more implementation examples.

In an implementation example, when the first intent includes the E2E network deployment intent, as shown in the following Table 1, the first intent mainly includes the following:
basic information: intent identifier, name, network type, and the like;
capacity performance requirement: quantity of services, quantity of concurrent services, total throughput, average latency, availability, and the like;
spectrum resource: frequency band, frequency, bandwidth, and the like;
radio parameter range: cell, TAC, gNB, and PLMN range; and
transport parameter: core network interconnection parameter.

**Table 1**

| Class | Parameter (English) | Parameter (Chinese) | Remarks |
|---|---|---|---|
| NetworkDeployIntent | IntentId | Intent identifier | |
| | IntentName | Intent name | |
| | Network Type | Network type | 4G and 5G |
| | CapacityPerform | Capacity performance requirement | |
| | Frequency | Spectrum resource | |
| | RadioPara | Radio parameter range | |
| | Transport | Transport parameter | Core network interconnection parameter |
| CapacityPerform | CapacityId | Capacity identifier | |
| | MapId | Map identifier | |
| | MaxConnectNumber | Maximum quantity of connections | |
| | ActiveConnectNumber | Quantity of concurrent connections | |
| | TotalULThpt | Total uplink throughput | |
| | TotalDLThpt | Total downlink throughput | |
| | AvgULLatency | Average uplink latency | |
| | AvgDLLatency | Average downlink latency | |
| | Availability | Network availability | |
| Frequency | FreqId | Spectrum identifier | |
| | FreqBand | Frequency band | |
| | arfcnDL | Downlink NARFCN | |
| | arfcnUL | Uplink NARFCN | |
| | BSChannelBWDL | Downlink bandwidth | |
| | BSChannelBWUL | Uplink bandwidth | |
| RadioPara | CellIdList | Cell ID range | |
| | gNBIdList | gNB ID range | |
| | TACList | TAC range | |
| | PLMNList | PLMN range | |
| | NRPCIList | PCI Range | |
| Transport | N2IpType | N2 address type | Core network N2 interface interconnection parameter |
| | N2IpAddress | N2 address | |
| | N2PortNum | N2 port number | |
| | SeGWIPType | Security gateway address type | |
| | SeGWIpAddress | Security gateway address | |
| | AuthenMode | Authentication mode | Certificate-0 and PSK-1 |
| | CertIpType | Certificate type | Valid when AuthenMode is set to Certificate. |
| | CertIpAddress | Certificate address | |
| | PSKValue | PSK key | Valid when AuthenMode is set to PSK. |

In an implementation example, when the second intent includes the E2E network service deployment intent, as shown in the following Table 2, the second intent mainly includes the following:
basic information: intent identifier, name, and the like;
capacity performance requirement: two modes are supported, which are simplified mode and precise mode;
simplified mode: the maximum quantity of services, the quantity of concurrent services, and average bandwidth and an average latency of each service are defined; and
precise mode: a precise location/moving range and the like of each service/service group are defined.

**Table 2**

| Class | Parameter (English) | Parameter (Chinese) | Remarks |
|---|---|---|---|
| NetworkDeployIntent | intentId | Intent identifier | |
| | intentName | Intent name | |
| | capacityPerformId | Associated capacity performance | Specifies the capacity performance requirement. |
| CapacityPerform | capacityPerformId | Capacity identifier | |
| | mapId | Map identifier | |
| | capacity Type | Capacity requirement type | Simplified mode and precise mode |
| | maxServiceNumber | Maximum quantity of services | Valid when Capacity Type is set to the simplified mode. |
| | activeServiceNumber | Quantity of concurrent services | |
| | avgULThpt | Average uplink throughput | |
| | avgDLThpt | Average downlink throughput | |
| | avgULLatency | Average uplink latency | |
| | avgDLLatency | Average downlink latency | |
| | serviceGrpId | Associated service group | Valid when Capacity Type is set to the precise mode. |
| | | | Defined by ServiceGrp, ServiceArea, Service SubArea, and ServiceFlow. |
| | availability | Network availability | |
| ServiceArea | serviceAreaId | Service area identifier | |
| | refPoint | Reference point | A series of vertices form a polygon. |
| ServiceSubArea | serviceSubAreaId | Service subarea identifier | |
| | serviceAreaId | Associated service area | |
| | shapeType | Subarea type | Area and line |
| | refPoint | Reference point | A series of vertices form a polygon or a line. |
| ServiceGrp | serviceGrpId | Service group identifier | |
| | serviceAreaId | Associated service area | |
| | maxServiceNumber | Maximum quantity of services | |
| | activeServiceNumber | Quantity of concurrent services | |
| | mobility type | Mobility type | Mobile and fixed |
| | locationList | Location list | Specifies the specific location of each service in the service group. |
| | | | Valid when the mobility type is fixed. |
| | serviceSubAreaId | Associated service subarea | Specifies the moving range of the service group: the subarea. |
| | | | Valid when the mobility type is mobile. |
| | height | Height | |
| | serviceFlowId | Associated service flow | Specifies a service flow parameter in the service group. |
| ServiceFlow | serviceFlowId | Service flow identifier | |
| | ulPacketSize | Uplink packet size | |
| | ulIntervalTime | Uplink interval | |
| | ulTransmissionTime | Uplink transmission time | |
| | dlPacketSize | Downlink packet size | |
| | dlIntervalTime | Downlink interval | |
| | dlTransmissionTime | Downlink transmission time | |

In an implementation example, when the third intent includes the E2E network value-added service intent, the third intent may include one or more of the following content: the network energy efficiency requirement, the network positioning requirement, another capability, and the like.

S202: The first device processes the intent based on second information, where the second information indicates an operation on the intent.

In a possible implementation, the second information includes at least one of the following items: creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent. Specifically, the second information indicating the operation on the intent may include at least one of the foregoing plurality of items of information, to improve the flexibility of implementing the solution.

In an implementation example, the following describes an implementation of the second information by using an example with reference to Table 3.

**Table 3**

| Operation | Description | Applicable scenario |
|---|---|---|
| create | Creates an intent | |
| delete | Deletes an intent | |
| reserve | Reserves a resource | Reserves a network resource for the intent. |
| release | Releases a resource (Releases the resource reserved for the intent) | Releases a network resource that has been reserved for the intent. |
| activate | Activates an intent | Execution |
| deactivate | Deactivates an intent | Stops execution of the intent and releases the reserved resource. (a purpose is to modify or delete the intent) |
| lock | Locks an intent | Suspends execution of the intent and skips releasing an allocated resource. (for example, subscribers in arrears) |
| unlock | Unlocks an intent | |
| modify | Modifies an intent | |
| notify | Notifies (or reports) intent information | Content to be reported includes one or more of the following items: |
| | | 1. Intent state change |
| | | 2. Resource reservation progress |
| | | 3. Resource reservation result |
| getStatus | Obtains an intent state | Including an administrative state, an execution state, a conflict state, and a fulfillment state. |
| getReservationResult | Obtains a reservation result of the intent | Content to be obtained includes: |
| | | 1. Resource reservation progress |
| | | 2. Resource reservation result |

In an implementation example of the scenario, the first device may perform the method shown in FIG. 2 by using a software system built in the device.

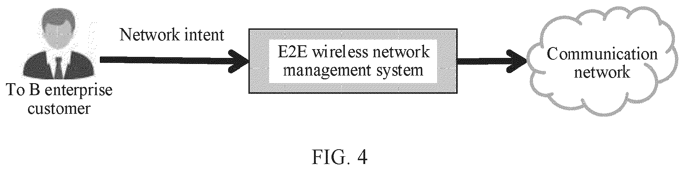

For example, the software system may be an E2E wireless network management system shown in FIG. 4. The first device may obtain the network intent (a network intent in this example is from a to B enterprise customer) in step S201 by using the E2E wireless network management system, and the first device can process the intent based on the second information by using the E2E wireless network management system, to manage a communication network by using the intent.

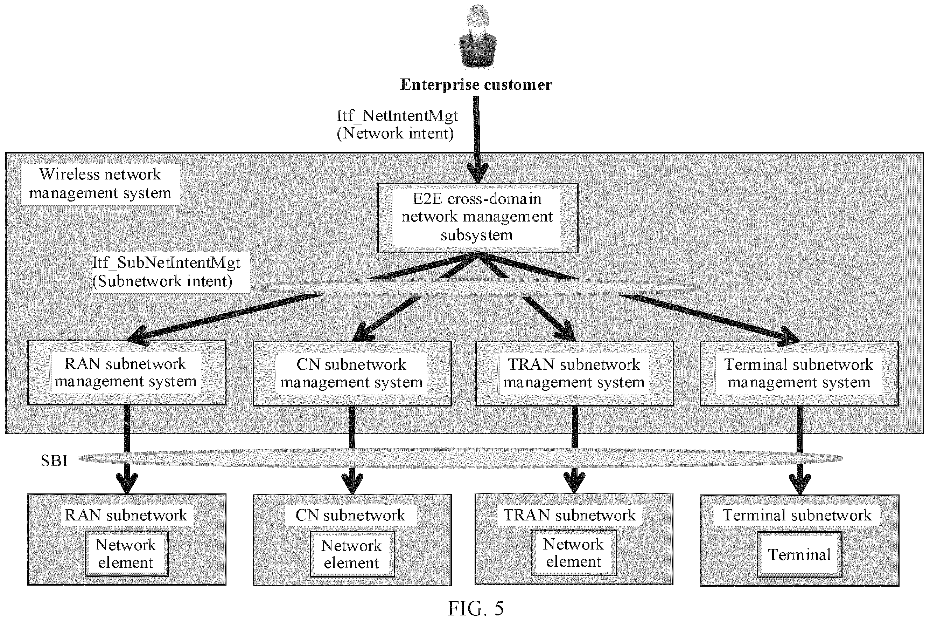

For another example, the software system may be a wireless network management system shown in FIG. 5, where the wireless network management system may include a management system of a network layer and a management system of a subnetwork layer. The management system of the network layer may include an E2E cross-domain network management subsystem shown in FIG. 5, and an obtained intent may be a network intent (Ite NetIntentMgt). The subnetwork management system may include a RAN subnetwork management system, a CN subnetwork management system, a TRAN subnetwork management system, and a terminal subnetwork management system. An obtained intent may be a subnetwork intent (Itf_SubNetIntentMgt).

Optionally, each subnetwork system may manage a network element in a corresponding subnetwork by using an SBI.

In a possible implementation, after the intent is processed based on the second information, the intent corresponds to at least one of the following states, including:
a first state, indicating management information of the intent;
a second state, indicating execution information of the intent;
a third state, indicating target fulfillment information of the intent; or
a fourth state, indicating conflict information of the intent.

Specifically, after the intent indicated by the first information is operated based on the second information, the intent indicated by the first information may be implemented by using the at least one of the foregoing states, and information in at least one dimension of the management information, the execution information, the target fulfillment information, and the conflict information that correspond to the intent is provided, to further simplify an operation and maintenance process of the communication network.

Optionally, the first state may be referred to as an administrative state, a management state, a locked administrative state, or another name. This is not limited herein.

Optionally, the second state may be referred to as an execution state, a running state, or another name. This is not limited herein.

Optionally, the third state may be referred to as a target fulfillment state, a fulfil state, a fulfillment state, or another name. This is not limited herein.

Optionally, the fourth state may be referred to as a conflict state, a state indicating whether a conflict occurs, or another name. This is not limited herein.

In a possible implementation, the first state indicates that the management state of the intent is locked or unlocked; the second state indicates that the running state of the intent is any one of null, not reserved, reserving, reserved, active, or executed; the third state indicates that the target fulfillment state of the intent is any one of null, fulfilled, or unfulfilled; and the fourth state indicates that conflict state information of the intent is any one of null, conflicted, or not conflicted. Specifically, at least the first state corresponding to the intent may be implemented in the foregoing manner, to provide a specific implementation of the solution.

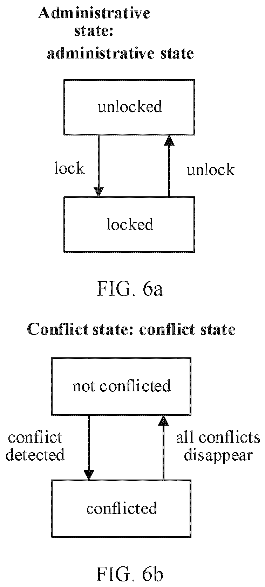

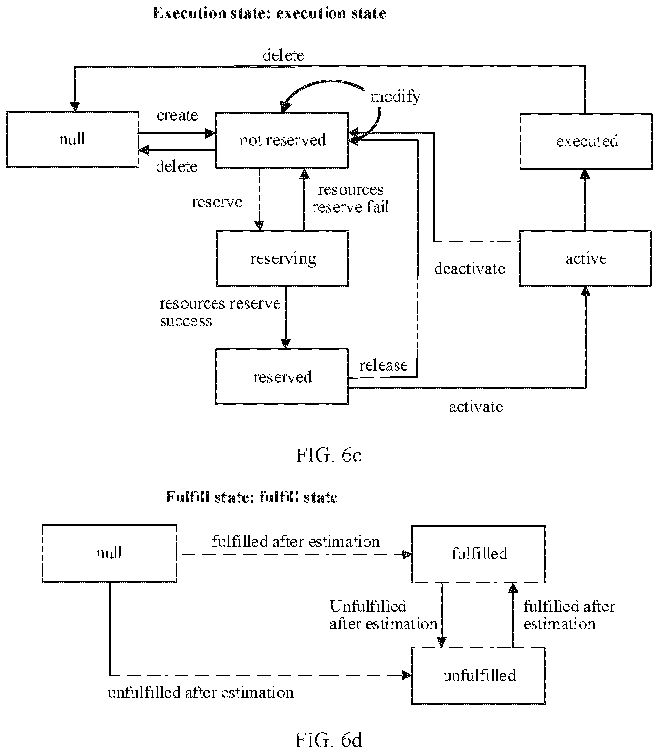

In an implementation example, implementation processes of the first state to the fourth state may be respectively implemented by using processes shown in FIG. 6a to FIG. 6d. Descriptions of various states may be implementation examples shown in Table 4.

**Table 4**

| English | Chinese | Value | Description | Corresponding drawing |
|---|---|---|---|---|
| administrative state | Administrative state | locked and unlocked | | FIG. 6a |
| execution state | Execution state | null, not reserved, reserving, reserved, active, or executed | | FIG. 6b |
| fulfil state | Fulfil state | null, fulfilled, and unfulfilled | Whether an intent objective is fulfilled after activation (execution) of the intent | FIG. 6c |
| conflict state | Conflict state | null, conflicted, or not conflicted | Whether the intent conflicts with another intent | FIG. 6d |

In a possible implementation, the first information and the second information are included in same configuration information. Specifically, in an implementation in which the first device obtains the second information by configuring the second information, the first information and the second information may be included in the same configuration information, to provide a one-click deployment manner corresponding to the intent and the operation on the intent, so as to simplify the intent deployment.

In a possible implementation, the first information and the second information are included in different configuration information. Specifically, in the implementation in which the first device obtains the second information by configuring the second information, the first information and the second information may be included in the different configuration information, to provide a step-by-step deployment manner corresponding to the intent and the operation on the intent.

In a possible implementation, the second information indicates M operations on the intent, and M is an integer greater than 1. Step S202 may specifically include: The first device processes the intent according to one instruction for the M operations, or processes the intent according to M instructions for the M operations.

Optionally, a manner of processing the intent according to the one instruction for the M operations may be referred to as a one-click deployment manner.

Optionally, a manner of processing the intent according to the M instructions for the M operations may be referred to as a step-by-step deployment manner.

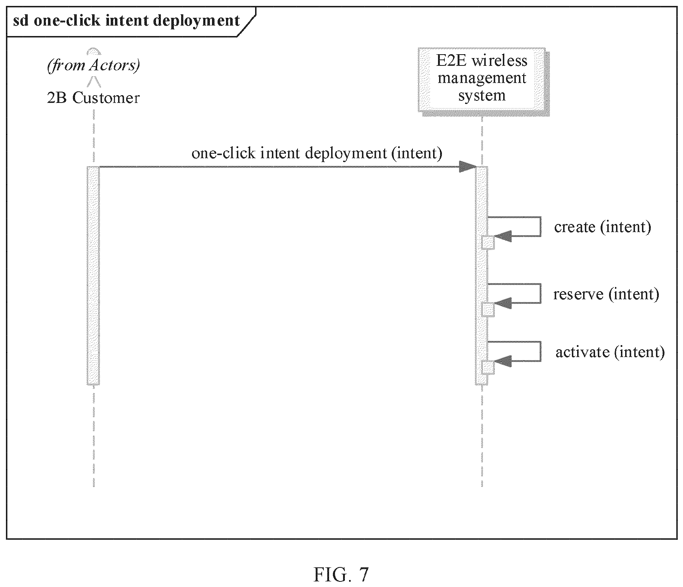

In an implementation example, an implementation process of step S202 is shown in FIG. 7. FIG. 7 is an implementation example of the one-click deployment manner, which may also be referred to as one-click intent deployment (one-click intent deployment). As shown in FIG. 7, an E2E wireless management system (E2E wireless management system) in the first device can perform, according to the one instruction for the M operations, an operation on the intent indicated by the first information, and the operation includes but is not limited to intent creation (create), resource reservation (reserve), activation (activate), and the like shown in FIG. 7.

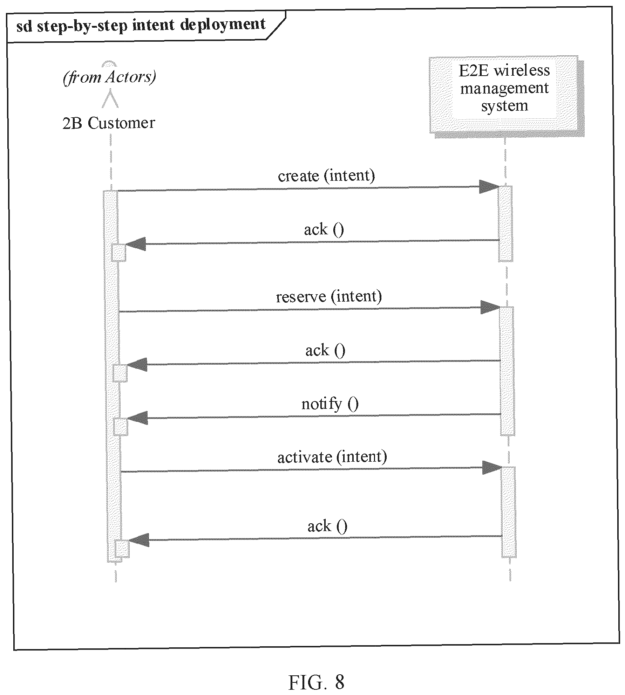

In an implementation example, another implementation process of step S202 is shown in FIG. 8. FIG. 8 is an implementation example of the step-by-step deployment manner, and may also be referred to as distributed intent deployment. As shown in FIG. 8, an E2E wireless management system (E2E wireless management system) in the first device can perform, according to the M instructions for the M operations, an operation on the intent indicated by the first information, and the operation includes but is not limited to operation information such as intent creation (create), resource reservation (reserve), and activation (activate) shown in FIG. 8.

Optionally, the E2E wireless management system (E2E wireless management system) in the first device can provide an acknowledgment (ack) or a notification (notify) for an execution result corresponding to the configuration information, so that a receiver of the acknowledgment (ack) or the notification (notify) is clear about the execution result.

Optionally, the second information may alternatively be preconfigured information. To be specific, the first device determines the second information by using default configuration information, and does not need to enter the second information by using another device (or manually).

Based on the foregoing technical solutions, after the first device obtains the first information and determines the intent indicated by the first information in step S201, the first device processes the intent based on the second information in step S202, where the second information indicates the operation on the intent. In other words, after the first device determines the intent for the communication network, the first device processes the intent based on the operation on the intent, to implement network operation and maintenance based on the intent. This can simplify the operation and maintenance process of the communication network, to reduce operation and maintenance costs.

In an application example, in a scenario oriented to a self-built/self-operation and maintenance wireless network of a to B enterprise, the foregoing implementation process can greatly simplify the network operation and maintenance and reduce the operation and maintenance costs. Configuration and deployment of a network and a service can be automatically completed based on a customer service intent. In addition, an enterprise business department and an IT department do not need to deeply understand a principle of the wireless network and configure a complex parameter.

To implement functions in the method provided in this application, a communication apparatus for performing the method may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

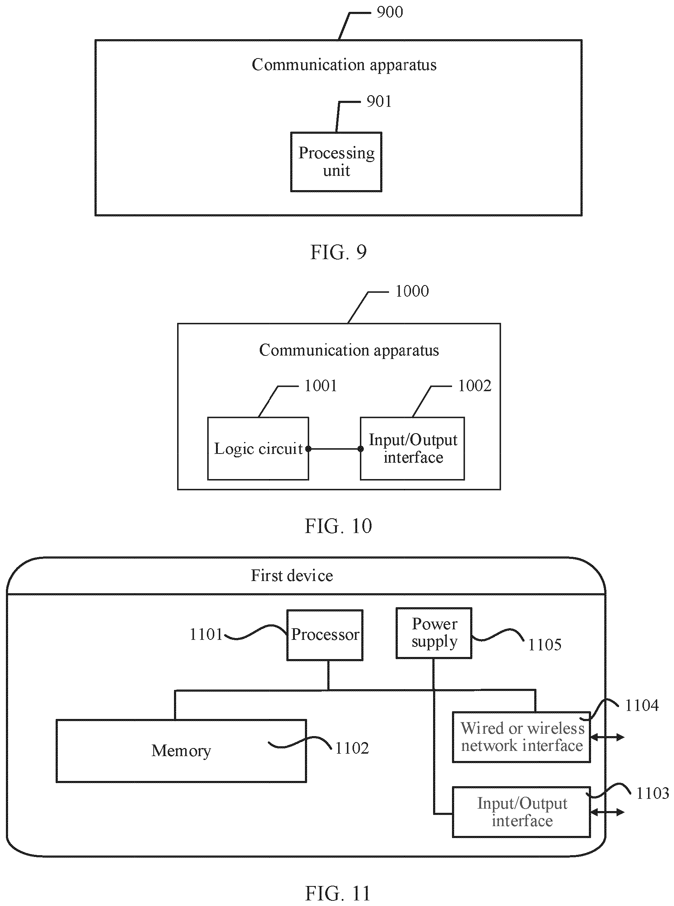

Refer to FIG. 9. An embodiment of this application provides a communication apparatus 900. The communication apparatus 900 can implement a function of any communication apparatus (for example, the first device) in the foregoing method embodiments, and therefore can also implement beneficial effects of the foregoing method embodiments. In this application, the communication apparatus 900 may be a first device, or may be a software module, an integrated circuit, a component, or the like inside the first device, for example, a chip. This is not limited. The following uses an example in which the communication apparatus 900 is the first device for description. The apparatus 900 includes a processing unit 901.

In a possible implementation, when the apparatus 900 shown in FIG. 9 is configured to perform the method related to the first device in the foregoing embodiments, the processing unit 901 is configured to obtain first information, where the first information indicates an intent; and the processing unit 901 is further configured to process the intent based on second information, where the second information indicates an operation on the intent.

In a possible implementation, the first information indicates an intent of a first network; or the first information indicates an intent of at least one of N subnetworks included in a first network, and N is a positive integer.

In a possible implementation, the intent indicated by the first information includes at least one of a first intent, a second intent, and a third intent, where the first intent is associated with network deployment, the second intent is associated with service deployment in a network, and the third intent is associated with a value-added service in the network.

In a possible implementation, the first intent indicates a network construction requirement and/or a network expansion requirement, the second intent indicates a service deployment requirement and/or a network slice requirement in the network, and the third intent indicates a value-added service requirement in the network.

In a possible implementation, the first intent includes at least one of a network type, a capacity performance requirement, a spectrum resource, a radio parameter range, or a transport parameter; the second intent includes at least one of associated capacity performance, a capacity identifier, a map identifier, a capacity requirement type, a service area, a service subarea, service group information, or service flow information; and the third intent includes at least one of a network energy efficiency requirement or a network positioning requirement.

In a possible implementation, the second intent includes a capacity requirement mode; and when the capacity requirement mode is a first mode, the second intent further includes at least one of a maximum quantity of services, a quantity of concurrent services, an average uplink throughput, an average downlink throughput, an average uplink latency, or an average downlink latency; or when the capacity requirement mode is a second mode, the second intent further includes at least one of an associated service group identifier, network availability, service area information, service subarea information, the service group information, or the service flow information.

In a possible implementation, the service area information includes at least one of a service area identifier or a reference point; the service subarea information includes at least one of a service subarea identifier, an associated service area, a subarea type, or the reference point; the service group information includes at least one of a service group identifier, the associated service area, the maximum quantity of services, the quantity of concurrent services, a mobility type, a location list, an associated service subarea, a height, or an associated service flow; and the service flow information includes at least one of a service flow identifier, an uplink packet size, an uplink interval, uplink transmission time, a downlink packet size, a downlink interval, or downlink transmission time.

In a possible implementation, the intent of the at least one subnetwork includes at least one of the following items: an intent of a radio access network in the at least one subnetwork, an intent of a core network in the at least one subnetwork, an intent of a transmission network in the at least one subnetwork, or an intent of a terminal in the at least one subnetwork.

In a possible implementation, the second information includes at least one of the following items: creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent.

In a possible implementation, after the intent is processed based on the second information, the intent corresponds to at least one of the following states, including:
a first state, indicating management information of the intent;
a second state, indicating execution information of the intent;
a third state, indicating target fulfillment information of the intent; or
a fourth state, indicating conflict information of the intent.

In a possible implementation, the first state indicates that the management state of the intent is locked or unlocked; the second state indicates that the running state of the intent is any one of null, not reserved, reserving, reserved, active, or executed; the third state indicates that the target fulfillment state of the intent is any one of null, fulfilled, or unfulfilled; and the fourth state indicates that conflict state information of the intent is any one of null, conflicted, or not conflicted.

In a possible implementation, the second information indicates M operations on the intent, and M is an integer greater than 1; and the processing unit 901 is specifically configured to: process the intent according to one instruction for the M operations, or process the intent according to M instructions for the M operations.

Optionally, a manner of processing the intent according to the one instruction for the M operations may be referred to as a one-click deployment manner.

Optionally, a manner of processing the intent according to the M instructions for the M operations may be referred to as a step-by-step deployment manner.

In a possible implementation, the first information and the second information are included in same configuration information.

In a possible implementation, the first information and the second information are included in different configuration information.

It should be noted that for content such as an information execution process of the units of the communication apparatus 900, specifically refer to the descriptions in the foregoing method embodiments of this application. Details are not described herein again.

FIG. 10 is another diagram of a structure of a communication apparatus 1000 according to this application. The communication apparatus 1000 includes at least a logic circuit 1001. The communication apparatus 1000 may be a chip or an integrated circuit.

Optionally, the communication apparatus further includes an input/output interface 1002.

The input/output interface 1002 may include an input interface and an output interface. Alternatively, the communication interface may be a transceiver circuit, and the transceiver circuit may include an input interface circuit and an output interface circuit.

In a possible implementation, the processing unit 901 shown in FIG. 9 may be the logic circuit 1001 in FIG. 10.

Optionally, the logic circuit 1001 may be a processing apparatus, and some or all of functions of the processing apparatus may be implemented by software. Some or all of the functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processing circuits (digital signal processors, DSPs), microcontrollers (micro controller units, MCUs), programmable controllers (programmable logic devices, PLDs) or other integrated chips, any combination of the foregoing chips or processors, or the like.

FIG. 11 is another diagram of a structure of a first device according to an embodiment of this application. As shown in FIG. 11, an embodiment of the first device may include one or more processors 1101, a memory 1102, an input/output interface 1103, a wired or wireless network interface 1104, and a power supply 1105.

The memory 1102 may be used for temporary storage or permanent storage. Further, the processor 1101 may be configured to: communicate with the memory 1102, and perform, on the first device, a series of instruction operations in the memory 1102.

In this embodiment, the processor 1101 may perform an operation performed by the first device in any one of the foregoing embodiments. Details are not described herein again.

In this embodiment, specific functional module division in the processor 1101 may be similar to a division manner of units such as the processing unit 901 (and a possible transceiver unit) described in FIG. 9, and details are not described herein again.

It may be clearly understood by a person skilled in the art that, for a purpose of convenient and brief description, for a detailed working process of the foregoing system, apparatus, and unit, refer to a corresponding process in the foregoing method embodiments, and details are not described herein again.

This application further relates to a computer storage medium, including computer-readable instructions. When the computer-readable instructions are executed, a computer is enabled to implement the steps performed by the first device in any one of the foregoing embodiments.

This application further relates to a computer program product including instructions. When the computer program product runs on a computer, the computer is enabled to implement the steps performed by the first device in any one of the foregoing embodiments.

Division into modules in this application is an example, and is merely logical function division. During actual implementation, another division manner may be used. In addition, functional modules in this application may be integrated into one processor, may exist alone physically, or two or more modules are integrated into one module. The integrated module may be implemented in a form of hardware, or may be implemented in a form of a software functional module.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims of this application and their equivalent technologies.

## Claims

1. An information processing method, comprising:
obtaining first information, wherein the first information indicates an intent; and
processing the intent based on second information, wherein the second information indicates an operation on the intent.

2. The method according to claim 1, wherein
the first information indicates an intent of a first network.

3. The method according to claim 1, wherein
the first information indicates an intent of at least one of N subnetworks comprised in a first network, and N is a positive integer.

4. The method according to any one of claims 1 to 3, wherein
the intent comprises at least one of a first intent, a second intent, and a third intent, wherein
the first intent is associated with network deployment, the second intent is associated with service deployment in a network, and the third intent is associated with a value-added service in the network.

5. The method according to claim 4, wherein
the first intent indicates a network construction requirement and/or a network expansion requirement, the second intent indicates a service deployment requirement and/or a network slice requirement in the network, and the third intent indicates a value-added service requirement in the network.

6. The method according to claim 4 or 5, wherein
the first intent comprises at least one of a network type, a capacity performance requirement, a spectrum resource, a radio parameter range, or a transport parameter;
the second intent comprises at least one of associated capacity performance, a capacity identifier, a map identifier, a capacity requirement type, a service area, a service subarea, service group information, or service flow information; and
the third intent comprises at least one of a network energy efficiency requirement or a network positioning requirement.

7. The method according to any one of claims 4 to 6, wherein the second intent comprises a capacity requirement mode; and
when the capacity requirement mode is a first mode, the second intent further comprises at least one of a maximum quantity of services, a quantity of concurrent services, an average uplink throughput, an average downlink throughput, an average uplink latency, or an average downlink latency; or
when the capacity requirement mode is a second mode, the second intent further comprises at least one of an associated service group identifier, network availability, service area information, service subarea information, the service group information, or the service flow information.

8. The method according to claim 7, wherein
the service area information comprises at least one of a service area identifier or a reference point;
the service subarea information comprises at least one of a service subarea identifier, an associated service area, a subarea type, or the reference point;
the service group information comprises at least one of a service group identifier, the associated service area, the maximum quantity of services, the quantity of concurrent services, a mobility type, a location list, an associated service subarea, a height, or an associated service flow; and
the service flow information comprises at least one of a service flow identifier, an uplink packet size, an uplink interval, uplink transmission time, a downlink packet size, a downlink interval, or downlink transmission time.

9. The method according to any one of claims 3 to 8, wherein the at least one subnetwork comprises at least one of the following items:
a radio access network subnetwork, a core network subnetwork, a transmission network subnetwork, or a terminal subnetwork.

10. The method according to any one of claims 1 to 9, wherein the second information comprises at least one of the following items:
creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent.

11. The method according to any one of claims 1 to 10, wherein after the intent is processed based on the second information, the intent corresponds to at least one of the following states, comprising:
a first state, indicating management information of the intent;
a second state, indicating execution information of the intent;
a third state, indicating target fulfillment information of the intent; or
a fourth state, indicating conflict information of the intent.

12. The method according to claim 11, wherein
the first state indicates that an administrative state of the intent is locked or unlocked;
the second state indicates that an execution state of the intent is any one of null, not reserved, reserving, reserved, active, or executed;
the third state indicates that a target fulfillment state of the intent is any one of null, fulfilled, or unfulfilled; and
the fourth state indicates that conflict state information of the intent is any one of null, conflicted, or not conflicted.

13. The method according to any one of claims 1 to 12, wherein the second information indicates M operations on the intent, and M is an integer greater than 1; and
the processing the intent based on second information comprises:
processing the intent according to one instruction for the M operations, or processing the intent according to M instructions for the M operations.

14. A communication apparatus, comprising a processing unit, wherein
the processing unit is configured to obtain first information, wherein the first information indicates an intent; and
the processing unit is further configured to process the intent based on second information, wherein the second information indicates an operation on the intent.

15. The apparatus according to claim 14, wherein
the first information indicates an intent of a first network.

16. The apparatus according to claim 14, wherein
the first information indicates an intent of at least one of N subnetworks comprised in a first network, and N is a positive integer.

17. The apparatus according to any one of claims 14 to 16, wherein
the intent comprises at least one of a first intent, a second intent, and a third intent, wherein
the first intent is associated with network deployment, the second intent is associated with service deployment in a network, and the third intent is associated with a value-added service in the network.

18. The apparatus according to claim 17, wherein
the first intent indicates a network construction requirement and/or a network expansion requirement, the second intent indicates a service deployment requirement and/or a network slice requirement in the network, and the third intent indicates a value-added service requirement in the network.

19. The apparatus according to claim 17 or 18, wherein
the first intent comprises at least one of a network type, a capacity performance requirement, a spectrum resource, a radio parameter range, or a transport parameter;
the second intent comprises at least one of associated capacity performance, a capacity identifier, a map identifier, a capacity requirement type, a service area, a service subarea, service group information, or service flow information; and
the third intent comprises at least one of a network energy efficiency requirement or a network positioning requirement.

20. The apparatus according to any one of claims 17 to 19, wherein the second intent comprises a capacity requirement mode; and
when the capacity requirement mode is a first mode, the second intent further comprises at least one of a maximum quantity of services, a quantity of concurrent services, an average uplink throughput, an average downlink throughput, an average uplink latency, or an average downlink latency; or
when the capacity requirement mode is a second mode, the second intent further comprises at least one of an associated service group identifier, network availability, service area information, service subarea information, the service group information, or the service flow information.

21. The apparatus according to claim 20, wherein
the service area information comprises at least one of a service area identifier or a reference point;
the service subarea information comprises at least one of a service subarea identifier, an associated service area, a subarea type, or the reference point;
the service group information comprises at least one of a service group identifier, the associated service area, the maximum quantity of services, the quantity of concurrent services, a mobility type, a location list, an associated service subarea, a height, or an associated service flow; and
the service flow information comprises at least one of a service flow identifier, an uplink packet size, an uplink interval, uplink transmission time, a downlink packet size, a downlink interval, or downlink transmission time.

22. The apparatus according to any one of claims 16 to 21, wherein the at least one subnetwork comprises at least one of the following items:
a radio access network subnetwork, a core network subnetwork, a transmission network subnetwork, or a terminal subnetwork.

23. The apparatus according to any one of claims 14 to 22, wherein the second information comprises at least one of the following items:
creating the intent, deleting the intent, reserving a resource for the intent, releasing the resource reserved for the intent, activating the intent, deactivating the intent, locking the intent, unlocking the intent, modifying the intent, notifying information associated with the intent, obtaining an intent state, or obtaining a resource reservation result of the intent.

24. The apparatus according to any one of claims 14 to 23, wherein after the first information is processed based on the second information, the intent corresponds to at least one of the following states, comprising:
a first state, indicating management information of the intent;
a second state, indicating execution information of the intent;
a third state, indicating target fulfillment information of the intent; or
a fourth state, indicating conflict information of the intent.

25. The apparatus according to claim 24, wherein
the first state indicates that an administrative state of the intent is locked or unlocked;
the second state indicates that an execution state of the intent is any one of null, not reserved, reserving, reserved, active, or executed;
the third state indicates that a target fulfillment state of the intent is any one of null, fulfilled, or unfulfilled; and
the fourth state indicates that conflict state information of the intent is any one of null, conflicted, or not conflicted.

26. The apparatus according to any one of claims 14 to 25, wherein the second information indicates M operations on the intent, and M is an integer greater than 1; and
the processing unit is further configured to: process the intent according to one instruction for the M operations, or process the intent according to M instructions for the M operations.

27. A communication apparatus, comprising a processing unit, wherein the processing unit is configured to perform the method according to any one of claims 1 to 13.

28. A communication apparatus, comprising at least one processor and a memory, wherein the at least one processor is coupled to the memory, and the processor is configured to perform the method according to any one of claims 1 to 13.

29. A computer-readable storage medium, wherein the medium stores instructions, and when the instructions are executed by a computer, the method according to any one of claims 1 to 13 is implemented.

30. A computer program product, comprising instructions, wherein when the instructions are run on a computer, the computer is enabled to perform the method according to any one of claims 1 to 13.
